(19) Europäisches Patentamt

European Patent Office

Office européen des brevets

(11) EP 1 389 730 A1

(12) **EUROPEAN PATENT APPLICATION**

(43) Date of publication:
18.02.2004 Bulletin 2004/08

(51) Int Cl.⁷: $G01J\ 4/04$, $G01M\ 11/02$

(21) Application number: 02017193.0

(22) Date of filing: 31.07.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **Agilent Technologies Inc.**
**a Delaware Corporation**
**Palo Alto, CA 94306 (US)**

(72) Inventors:
• **Schubert, Michael**
  **72074 Tuebingen (DE)**
• **Bogumil, Konstanze**
  **71083 Herrenberg (DE)**

(74) Representative: **Barth, Daniel**
  **c/o Agilent Technologies Deutschland GmbH,**
  **Patentabteilung,**
  **Herrenbergerstrasse 130**
  **71034 Böblingen (DE)**

(54) **Device and method for polarization-extinction-ratio-measurement**

(57)     Disclosed is a power detection device (11) for determining a polarization extinction ratio (PER) for aligning a polarization maintaining optical fiber (PMF) to an optical source providing a linear polarized optical signal. The power detection device (11) comprises a polarization signal splitting device (26), whereby the optical signal transmitted by the fiber (16) is split into a parallel polarized signal component (28) having a signal power value ($P_p$) and perpendicular polarized signal component (29) having a signal power value ($P_s$), which are measured by measuring elements (31,32). The polarization extinction ratio is derived from the determined signal power values $P_s$ and $P_p$. If this ratio is maximized, one of the two principal polarization axes of the PMF (16) is coincident with the linear polarization state of the optical source (36). This allows a maximal maintaining of the polarization state at the end of the fiber.

Fig. 1

EP 1 389 730 A1

**Description**

Background of the Invention

The invention relates to determining an extinction ratio (PER).

In many applications in lightwave communication linear polarized light have to be guided from a light source to a distinct point of the optical communication network. For such a connection polarization maintaining fibers (PMF) are used. To maintain the linear polarization of the light while traveling through the fiber one of the principal axes of the PMF (the fast or the slow axis) has to be aligned with the linear polarized light of the light source. These alignment is done by rotation of the fiber around the fiber axis. The quality of the linear polarization at the end of the fiber is described by the polarization extinction ratio, which describes the power ratio between the two orthogonal polarization states.

Summary of the invention

It is an object of the invention to provide an improved measurement for determining an polarization extinction ratio. This object is solved by the independent claims. Preferred embodiments are shown by the dependent claims.

The invention thus fulfils that at least two different optical power values of a transmitted optical signal are simultaneously measured to determine the polarization extinction ratio (PER): a) total power value representing the total optical power of the optical signal and a first power value representing the optical power of a portion of the optical signal having a first state of polarization or b) total power value representing the total optical power of the optical signal and a second power value representing the optical power of a portion of the optical signal having a second state of polarization substantially perpendicular to first state of polarization or c) a first power value representing the optical power of a portion of the optical signal having a first state of polarization and a second power value representing the optical power of a portion of the optical signal having a second state of polarization substantially perpendicular to first state of polarization.

The invention thus fulfils that at least the powers of both orthogonal polarized states of a transmitted optical signal are simultaneously measured to determine the PER. The simultaneous measurement increases the rate of determining the PER enabling an active and fine alignment beam by rotation of a PMF to a linear polarized, e. g. of a laser diode. Since the power of the both orthogonal polarized states is simultaneously measured fluctuations of the optical signal power does not affect the determination of the PER. This enables an exact real time measurement of the PER.

The invention does further lead to eliminate fluctuations in the optical signal power while measuring at least two different optical power values for the polarization extinction ratio. An exact real time polarization extinction ratio measurement for the fiber alignment can be enabled.

In one preferred embodiment of the invention the optical signal transmitted through a PMF is split into the two orthogonally polarized states by a polarizing beam splitter. The PER is determined by simultaneously measuring the optical power of the p- and s-polarized fraction of the optical signal using the following definition:

$$PER = 10\log\left[\frac{P_p \cdot C_p}{P_s \cdot C_s}\right]$$

whereby $P_p$ represents a first power value of a portion of the optical signal having a first state of polarization, e. g. the power of the parallel polarized fraction of the signal power and $P_s$ represents a second power value of a portion at the optical signal having a second state of polarization substantially perpendicular to a first state of polarization, e. g. the power of perpendicular polarized fraction of the signal power. $C_p$ and $C_s$ represent the transmission coefficients for parallel and perpendicular polarized light obtained by calibration.

According to an alternative embodiment of the invention the optical power of either the p-polarized or the s-polarized fraction of the signal power is measured. Additionally the total transmitted power is determined using a beam splitter and a fast photodiode, which can also be used for a positional alignment. The PER can be calculated by:

$$PER = 10\log\left[\frac{P_t \cdot C_t}{P_s \cdot C_s} - 1\right] = 10\log\left[\frac{P_p \cdot C_p}{1 - P_p \cdot C_p}\right]$$

whereby $P_t$ represents the total transmitted optical power and $P_p$ the optical power of the parallel polarized fraction of the signal power and $P_s$ the optical power of perpendicular polarized fraction of the same signal power. $C_t$, $C_p$ and $C_s$ represent the transmission coefficients for the total power, the parallel and perpendicular polarized light obtained by calibration.

Due to the measurement of the total transmitted optical power the transmitting element, e. g. the optical fiber and the interfaces could be controlled.

Alternatively, if all of the three power values $P_t$, $P_s$ and $P_p$ will be measured, it is possible to compare the polarization extinction ratio determined by the parallel and perpendicular signal power values with the polarization extinction ratio determined by the measurement of the $P_t$ value and either $P_s$ or $P_p$ value. This leads to a control function.

In a further embodiment, after positioning one end of the fiber opposite to the optical source, the alignment will be started. A first polarization extinction ratio will be determined by measuring at least two values of the optical signal power. After aligning the end of the fiber by rotating with respect to the measured ratio a second ratio will be determined. By comparing at least the last and the present ratio the direction of rotating the fiber will be indicated.

Furthermore the degree of proceeding in stepwise or continuously rotating for an active and fine alignment will be calculated. This will be repeated until the polarization extinction ratio is maximized. In this state the axis of the polarization components of the optical signal of the signal source and the axis of the polarization components of the fiber are nearly or exactly coincident.

Further, according to a further embodiment, the orientation a polarization axis of the fiber could be determined and marked or fixed with the source. For this procedure the orientation of the polarization axis of the linear polarized optical source is usually known. One end of the fiber is positioned to the optical source and will be stepwise or continuously aligned by rotating until the polarization extinction ratio measured at the opposite end is maximized. In this position a marker for one polarization axis is provided on the end of the fiber or the fiber could be fixed with the source.

Another embodiment of the invention comprises a device for determining a polarization extinction ratio in real time. This device comprises a power detection device adapted for deriving at least two optical power values to measure simultaneously at least two optical power values from the transmitted optical signal. An analysis unit derives the polarization extinction ratio from the determined at least two optical power values. This leads to real time measuring results without any influence by a potentially fluctuation of the transmitted optical signal.

In one further embodiment the device comprises a beam splitter for deriving the total power value and a polarization signal splitting device for determining a first state of polarization, e. g. the parallel polarized signal component and for the determining a second state of polarization, e. g. the perpendicular polarized signal component of the splitted signal. They are fixed in an adjusted manner and positioned in distance and angular to the polarization signal splitting device with respect to the splitting angle of the splitting device.

Alternatively the device comprises a beam splitter and a polarization dependent filter for filtering from the optical signal a first or a second state of the polarization.

In a further embodiment of the device there is provided at least one measuring element measuring $P_s$ and/or Pp and a measuring element, e. g. a photodiode to determine the total transmitted optical signal power $P_t$. This measuring element for $P_t$ is preferably combined with a beam splitter and positioned in front of the polarization dependent beam splitter. For determination of the polarization extinction ratio two of the three measuring elements will be at least active for measuring.

Brief description of the drawings

Other objects and many of the attendant advantages of the present invention will be readily appreciated and become better understood by reference to the following detailed description when considering in connection with the accompanied drawing. Features that are substantially or functionally equal or similar will be referred to the same reference sign.

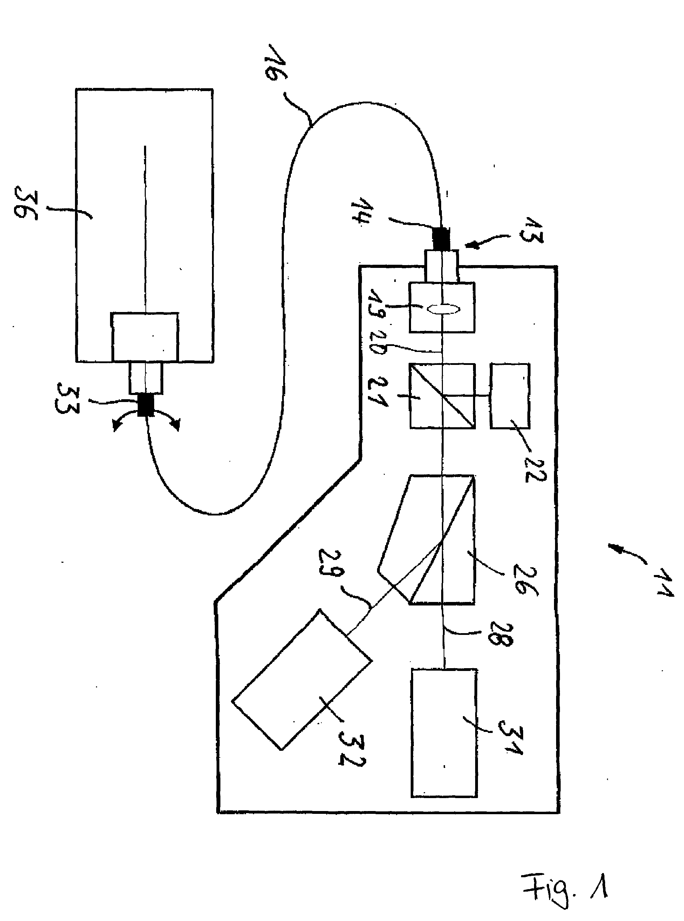

Figure 1 shows a schematic view of a preferred embodiment according to the present invention.

Detailed description of the invention

Figure 1 illustrates a schematic view of a power detection device 11 according to the invention. The power detection device 11 comprises an input 13 to connect one end 14 of a polarization maintaining optical fiber (PMF) 16 to the measuring device 11. The power detection device 11 further comprises a collimator 19 for the incident beam 20, a beam splitter 21 connected with an optical signal power measurement element 22. This measurement element 22 is for example provided as a photodiode for a fast measurement of the total transmitted optical signal $P_t$ but not required for PER measurement. Following the beam path 20 there is further provided a polarization dependent beam splitter 26, e. g. Glan-Thompson-Prism, splitting the optical power signal into a portion having a first state of polarization, e. g. a parallel polarized signal component $P_s$ 28 and into a portion having a second state of polarization, e. g. a perpendicular polarized optical signal component $P_s$ 29. To each optical signal component 28, 29 is positioned an optical power measuring element 31, 32 for measuring the vertical polarized light and the horizontal polarized light as a value $P_s$ and Pp.

An analysis unit (not shown) is connected to the power detection device 11 and adapted for deriving the polarization extinction ratio from the measured values $P_t$, $P_s$ and Pp. This ratio is e. g. visualized on a display in real time.

The opposite end 33 of the fiber 16 is positioned to an optical source 36 in a predetermined position. The optical source 36 is providing a linear polarized optical signal. Such optical signal sources are e. g. tunable laser sources.

The fiber 16 is provided as a polarization maintaining fiber. The end 14 of the fiber 16 shows a polarization-axis-marker to align the axis of polarization of the fiber in an exact position to the measuring device 11 to secure an exact splitting of the polarized signal for the measurement of the measuring elements 31, 32. The measurement device 11 is used to align the free end 33 of the fiber in a position to the signal source, whereby the polarization extinction ratio of the connection is maximized.

For polarization maintaining of the signal it is important to align the axis of polarization of the fiber preferably coincident to the axis of polarization of the linear polarized signal source. The alignment of the fiber will be achieved by two measurement methods.

To determine the polarization extinction ratio, it is possible to determine the optical signal power values of $P_t$ and $P_s$ or Pp or the signal power values $P_s$ and Pp or all signal power values $P_t$, $P_s$ and Pp until the ratio is maximized due to the rotation of the fiber.

After determining a first ratio and at least partly rotating the end 33 of the fiber 16 a second measurement is done for the second polarization extinction ratio. If this ratio decreases, the direction of the rotation has to be changed. If this ratio increases and the ratio will be maximized, the rotation direction will be continued. This will be repeated until the polarization extinction ratio is maximized. The rotating of the fiber end is controlled by the analysis unit.

After the polarization extinction ratio and the power has been maximized, the end 33 of the fiber 16 will be fixed e. g. welded, soldered or bonded to the optical source 36.

For real time polarization extinction ratio measurement it is also possible, that the beam splitter 21 and/or the optical signal power measurement are omitted. If, however, they are provided a first fiber position adjustment to the power detection device 11 is assisted. If the beam splitter 21 and the signal power measuring element 22 are provided only one of the two optical measuring elements 31, 32 are necessary to determine the polarization extinction ratio.

**Claims**

1. A method for determining an polarization extinction ratio of an optical signal, comprising steps of:

   - receiving the optical signal,

   - simultaneously deriving from the received optical signal at least two optical power values of: a total power value representing the total optical power of the optical signal, a first power value representing the optical power of a portion of the optical signal having a first state of polarization and a second power value representing the optical power of a portion of the optical signal having a second state of polarization substantially perpendicular to first state of, and

   - deriving the polarization extinction ratio from the determined at least two optical power values.

2. Method according claim 1, wherein the step of deriving the power values comprises measuring the

optical power value ($P_p$) of the parallel polarized signal component (28) and the optical power value ($P_s$) of the perpendicular polarized signal component (29).

3. Method according claim 1, wherein the step of deriving the power values comprises measuring the total transmitted optical power value ($P_t$) and at least the optical power value ($P_p$) of the parallel polarized signal component (28) or one of the optical power value ($P_s$) of the perpendicular polarized signal component (29).

4. A method for determining a polarization extinction ratio of an optical signal for fiber alignment or fiber marking comprising steps of:

   - positioning one free end (33) of a fiber (16) to a linear polarized optical source (36),

   - transmitting the optical signal from the optical source (36) via fiber (16) to a power detection device (11),

   - executing the method of claim 1 or any one of the above claims for the transmitted optical signal.

5. Method according claim 1 or anyone of the claims 2 to 4, further comprising a step of maximizing the polarization extinction ratio by rotatably aligning stepwise or continuously one end (33) of the optical fiber (16) to the optical source (36).

6. A device for determining an polarization extinction ratio of an optical signal, comprising:

   - a power detection device (11) adapted for simultaneously deriving from the optical signal at least two optical power values of: a total power value representing the total optical power of the optical signal, a first power value representing the optical power of a portion of the optical signal having a first state of polarization and a second power value representing the optical power of a portion of the optical signal having a second state of polarization substantially perpendicular to first state of, and

   - an analysis unit adapted for deriving the polarization extinction ratio from the determined at least two optical power values.

7. The device of claim 6, wherein the power detection device (11) comprises at least one of: a beam splitter (21) for splitting up a portion of the optical signal, or a signal derived there from, for deriving the total power value, a dependent beam splitter (26) for splitting up the optical signal, or a signal derived there from, into the portion of the optical signal having the first state of and into the alternative portion of the optical signal having the second state of or a dependent filter for filtering from the optical signal, or a signal derived there from, at least one of the portion of the optical signal having the first state of polarization or the portion of the optical signal having the second state of polarization.

8. The device of claims 6 or 7, wherein the dependent signal splitting device (26) and two optical power measuring elements (31, 32) adapted to determine the first state and a second state of polarization from the optical signal determining simultaneously at least two different signal power values ($P_t$, $P_s$, Pp) of the transmitted optical signal power.

9. Measuring device according claim 6 or any of the claims 6 to 8, comprising a Glan-Thompson-Prism as polarization dependent signal splitting device (26) simultaneously splitting the optical signal into the first state and the second state of polarization as signal components (28, 29).

Fig. 1

**European Patent Office**

**EUROPEAN SEARCH REPORT**

Application Number

EP 02 01 7193

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SENLU XU ET AL: "Novel system for measuring extinction ratio on polarization-maintaining fibers and the devices" FIBER OPTIC AND LASER SENSORS VIII, SAN JOSE, CA, USA, 17-19 SEPT. 1990, vol. 1367, pages 303-308, XP002228757 Proceedings of the SPIE - The International Society for Optical Engineering, 1991, USA ISSN: 0277-786X * page 304, paragraph 1 - page 307, paragraph 3 * * figures 1,2 * | 1-9 | G01J4/04 G01M11/02 |
| X | PATENT ABSTRACTS OF JAPAN vol. 2000, no. 08, 6 October 2000 (2000-10-06) & JP 2000 131193 A (NEC CORP), 12 May 2000 (2000-05-12) * abstract * * paragraphs [0009]-[0025] * * figure 1 * | 1-9 | |
| X | US 5 881 185 A (FETH JOHN R ET AL) 9 March 1999 (1999-03-09) * column 3, line 6 - line 15 * * column 5, line 19 - column 6, line 17 * * column 8, line 16 - line 32 * * figure 6 * | 1-9 | TECHNICAL FIELDS SEARCHED (Int.Cl.7) G01J G01M |
| A | EP 1 217 405 A (AXSUN TECHNOLOGIES INC) 26 June 2002 (2002-06-26) * abstract * * paragraphs [0010]-[0018],[0032]-[0049] * * figures 3,5 * | 5 | |

-/--

The present search report has been drawn up for all claims

| Place of search | Date of completion of the search | Examiner |
|---|---|---|
| MUNICH | 28 January 2003 | Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 01 7193

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WAKAKI M ET AL: "FIBER-OPTIC POLARIZER USING BIREFRINGENT CRYSTAL AS A CLADDING" APPLIED OPTICS, OPTICAL SOCIETY OF AMERICA,WASHINGTON, US, vol. 35, no. 15, 20 May 1996 (1996-05-20), pages 2591-2594, XP000589861 ISSN: 0003-6935 * page 2592, column 2, paragraph 4 - page 2593, column 1, paragraph 1 * ----- | 9 | |

TECHNICAL FIELDS
SEARCHED (Int.Cl.7)

The present search report has been drawn up for all claims

| Place of search | Date of completion of the search | Examiner |
|---|---|---|
| MUNICH | 28 January 2003 | Haller, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 01 7193

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2003

| Patent document cited in search report | | Publication date | Patent family member(s) | | Publication date |
|---|---|---|---|---|---|
| JP 2000131193 | A | 12-05-2000 | NONE | | |
| US 5881185 | A | 09-03-1999 | DE | 69707687 D1 | 29-11-2001 |
| | | | DE | 69707687 T2 | 01-08-2002 |
| | | | EP | 0919004 A2 | 02-06-1999 |
| | | | JP | 2002515985 T | 28-05-2002 |
| | | | WO | 9808119 A2 | 26-02-1998 |
| EP 1217405 | A | 26-06-2002 | EP | 1217405 A2 | 26-06-2002 |

EPO FORM P0459

For more details about this annex : see Official Journal of the European Patent Office, No. 12/82